# EUROPEAN PATENT SPECIFICATION

(11) **EP 1 075 608 B1**
(45) Date of publication and mention of the grant of the patent: **23.06.2004**
(21) Application number: 99918185.2
(22) Date of filing: 29.04.1999
(51) Int. Cl.: F16D 65/853

(54) **BRAKING SYSTEM INCORPORATING A LIQUID-COOLED BRAKE**
BREMSSYSTEM MIT FLÜSSIGKEITSGEKÜHLTER BREMSE
SYSTEME DE FREINAGE INCORPORANT UN FREIN REFROIDI PAR LIQUIDE

(30) Priority: 29.04.1998 GB 9808984
(43) Date of publication of application: 14.02.2001
(73) Proprietor: Meritor Heavy Vehicle Braking Systems (UK) Limited, Reading, Berkshire RG6 1LA (GB)
(72) Inventor: MUELLER, Jan-Peter, D-83607 Holzkirchen (DE)
(74) Representative: Jones, John Bryn
(86) International application number: PCT/GB1999/001331
(87) International publication number: WO 1999/056032

(56) References cited:
- CH-A- 516 105
- DE-A1- 3 518 795
- US-A- 3 882 930
- US-A- 3 949 844
- US-A- 5 445 242

## Description

This invention relates to a braking system of the kind incorporating a liquid-cooled brake, primarily for a vehicle, the brake having a housing within which are provided cooperating fixed and rotatable braking surfaces which are brought into braking engagement upon operation of actuating means.

The heat generated in such an enclosed brake during braking can be difficult to dissipate because it is not possible for significant air circulation to occur in the region of the braking surfaces, which become heated during braking.

US3882930 shows a brake, wherein a variable cooling flow to the brake can be provided depending upon operation parameters.

It has been proposed to supply a brake with additional liquid during braking for cooling purposes and it is an object of the invention to provide a braking system in which cooling liquid is supplied in a manner which meets operational requirements more closely than hitherto.

Thus, according to the present invention there is provided a braking system as defined in accompanying claim 1.

Typically, the cooling liquid in the first circuit is supplied to the brake at relatively low pressure and the cooling liquid in the second circuit is supplied to the brake at relatively high pressure.

The invention will now be described, by way of example with reference to the accompanying drawings in which:-
Figure 1 is a diagrammatic representation of one form of the braking system of the invention in a first operative condition, illustrating inset part of the circuit in a second operative condition, and
Figure 2 is a diagrammatic representation of a control circuit of the braking system of the invention.

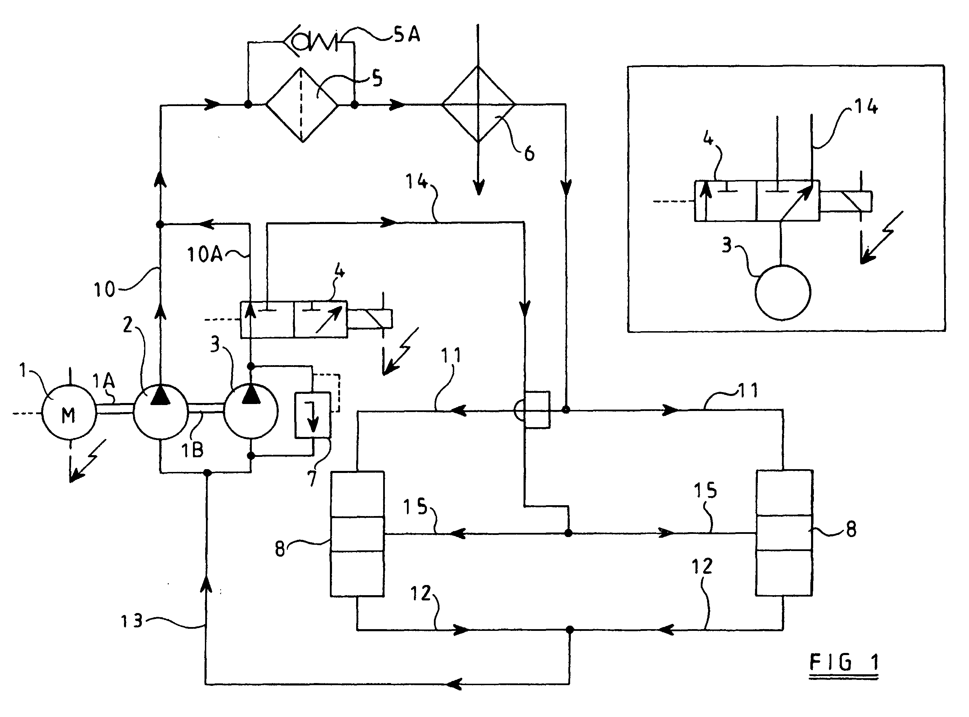

The braking system illustrated in Figure 1 includes a drive motor 1 having a driving connection, illustrated at 1A, 1B with a pair of pumps 2, 3 which respectively provide a relatively high liquid flow rate at relatively low pressure and a relatively low flow rate at relatively high pressure. The pumps may, alternatively, be driven independently by separate motors. The cooling liquid would, in practice, be oil present in the hydraulic system and/or gearbox of a vehicle on which the system is installed. The output from the pump 2 enters a low pressure line 10 and is directed through a filter 5, which is protected against excessive pressure by a non-return valve 5A, the filtered oil leaving the filter 5 passing through a heat exchanger 6 of any appropriate type and thence to a branch line 11 which directs the oil through a pair of brakes 8. The pump motor is controlled, in a manner to be described hereafter, to be switched on whenever the temperature of the oil leaving the brake exceeds a predetermined value, e.g. 70°C, or during brake application. Oil heated by passage through the brakes is directed by lines 12 into a return line 13, from which it re-enters the pumps 2 and 3 for re-circulation.

The output from the pump 3 is fed via a two-position solenoid-operated valve 4, conveniently a spool valve, which, in the position illustrated, directs the output from the pump 3 to the low pressure line 10 via a branch line 10A. A pressure relief valve 7 may be provided in parallel with the pump 3 to protect against excessively high pressure peaks in the high pressure circuit. Upon actuation of the driver's brake control, a signal is supplied to change over the position of the valve 4 to that shown inset in Figure 1, enabling the high pressure output of the pump 3 to be fed directly into an output line 14 and thence to a high pressure input line 15 which supplies the oil to the brake interiors. In the case of a brake, such as an oil-immersed disc brake having a central drive shaft, the oil may conveniently be fed along the shaft to a central region of the brake adjacent the friction plates. Heated oil from the brakes leaves via the lines 12 and is directed via line 13 to the pumps and recirculated through the brakes via the heat exchanger 6.

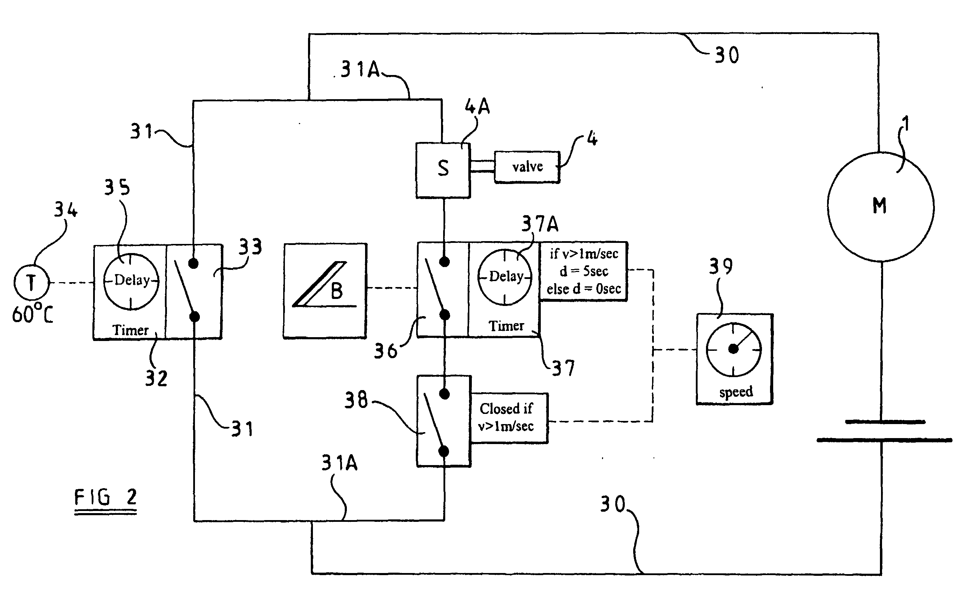

The supply of cooling liquid in the braking system of the invention is controlled by the circuit illustrated in Figure 2, in which the drive motor/pump unit is designated M. An electrical supply circuit is established through lines 30 and 31 and a temperature sensitive switch device 32 incorporating a switch 33. The switch device 32 incorporates a temperature sensing thermostat 34 and a timer device 35. The lines 31 also supply, via branches 31A. the solenoid 4A operating the valve 4, the operation of the solenoid being dependent upon a switch 36 activated by a driver-operated control B, such as a pedal, the switch itself being controlled by a timer device 37 incorporating a delay device 37A. Both the timer 37 and switch 38 are subject to a speed sensitive device 39, switch 38 being closed only if the vehicle speed is greater than 1 metre per second.

Whenever the temperature of the oil in the system exceeds 70°C, or the vehicle speed is greater than 1 m/sec and the brake pedal B is depressed to close the switch 36, the motor/pump assembly 1 is activated. The switch 36 may conveniently be a pressure switch, a brake light switch or any other appropriate switch device. If the vehicle is stationary, or its speed is less than 1 metre per second, the heat generated therein is not sufficiently high to require the supply of high pressure cooling oil and the switch 38 remains open, preventing activation of the solenoid 4A, so that the valve 4 is in the position illustrated in the main part of Figure 1. Both pumps then supply oil to the low pressure circuit, the pump 3 via the branch 10A.

The brake is cooled by the supply of low pressure oil, until such time as the temperature of the oil leaving the brakes, as sensed by the thermostat 34 of the switch device 32, is 70°C or less, whereupon the thermostat provides a signal which first activates the timer 35, enabling the supply of low pressure oil to continue for a short time, e.g. 10 seconds, before the switch 33 is operated to de-activate the motor/pump unit.

If, on the other hand, the vehicle speed is greater than 1 metre per second, so that excessive heat is likely to be generated in the brake, switch 38 closes and switch 36 is closed by the brake pedal to actuate the solenoid 4A, which changes over the valve 4 to its alternative position illustrated inset in Figure 1, enabling high pressure oil to be supplied to the brakes for cooling. When the brake pedal B is released, if the vehicle is still travelling at more than 1 metre per second, opening of the switch 36 will be delayed for a predetermined time set by the delay device 37A, permitting the continued supply of high pressure oil to ensure that the linings are cooled to the temperature of the cooling oil. The effect of this is to ensure that heat transfer from the linings into the low pressure oil circuit during each brake application takes place at the lowest possible temperature level. Furthermore, it prevents the pump drive motor from overheating when the brake is re-applied at intervals of less than the delay set by the timer, such as may occur in dense traffic conditions, for example, when pumping of the brake pedal may take place.

It will be understood that the twin cooling circuits of the system of the invention may be controlled to operate in any convenient manner in order to fulfil the requirements of a particular installation and the described sequence of switching according to timed delays may be varied as required, both as regards the sequence itself and the control means employed.

It is possible to dispense with at least some of the conventional pipe runs supplying cooling liquid to the brakes of a vehicle by using one or more vehicle axles and/or hollow members of the vehicle body or chassis as liquid conduits and/or reservoirs. Such an arrangement at least reduces or possibly eliminates the need for dedicated pipe runs, resulting in relatively short connections to the brakes and generally leading to reduced installation costs.

## Claims

1. A braking system comprising a liquid-cooled brake (8) having a housing within which are provided co-operating fixed and rotatable braking surfaces which are brought into braking engagement upon operation of actuating means, a first flow circuit (10, 10A, 11 ) arranged to supply cooling liquid to the brake via the first flow circuit in dependence upon a temperature dependent operational parameter for maintaining the temperature of cooling liquid in the system below a predetermined maximum value, and a second flow circuit (14, 15) controllable to supply cooling liquid to the brake via the second flow circuit, separate from the first flow circuit, upon brake actuation.

2. A braking system as claimed in claim 1, wherein the cooling liquid in the first circuit is supplied to the brake at relatively low pressure and the cooling liquid in the second circuit is simultaneously supplied to the brake at relatively high pressure.

3. A braking system as claimed in claim 2 wherein the liquid cooled brake is an oil immersed disc brake having a central drive shaft and the cooling liquid in the second circuit is supplied to the brake at relatively high pressure by being fed along the shaft to a central region of the brake adjacent friction plates.

4. A braking system as claimed in any one of the preceding claims, wherein the first circuit includes a heat exchanger (6) through which the cooling liquid in that circuit passes.

5. A braking system as claimed in any one of the preceding claims, wherein the cooling liquid is circulated in the low flow circuits by electrically driven (1) liquid propulsion means (2, 3) operated by an electrical supply circuit serving to control the supply of cooling liquid to the brake.

6. A braking system as claimed in Claim 5, wherein the liquid propulsion means comprises at least one electric motor (1) and pumps (23) driven by at least one motor for respectively circulating cooling liquid in the first and second flow circuits.

7. A braking system as claimed in claim 6, wherein the electrical supply circuit serves to cause cooling fluid to be supplied from both pumps to the brake through the first flow circuit when no cooling fluid is circulating in the second flow circuit.

8. A braking system as claimed in claim 5, 6 or 7 wherein the electrical supply circuit comprises a temperature sensitive switch (32) in parallel with a further switch (36) operated by a driver-operated control device (B) for actuating the brake, the further switch being connected to an electrically operated valve (4) serving to control the flow of cooling liquid in the second liquid circuit.

9. A braking system according to claim 8, wherein the electrically operated valve (4) is influenced by a speed-sensitive device sensing vehicle speed.

## Patentansprüche

1. Bremssystem umfassend eine mit Flüssigkeit gekühlte Bremse (8) mit einem Gehäuse, in dem zusammen wirkende befestigte und drehbare Bremsflächen vorgesehen sind, die in Folge der Einwirkung von Betätigungsmitteln in Bremseingriff gebracht werden, einen ersten Strömungskreis (10, 10A, 11), der so angeordnet ist, dass er über den ersten Strömungskreis in Abhängigkeit eines temperaturabhängigen Betriebsparameters der Bremse Kühlflüssigkeit zuführt, um die Temperatur der Kühlflüssigkeit im System unter einem vorbestimmten maximalen Wert zu halten, und einen zweiten Strömungskreis (14, 15), der steuerbar ist., um über den zweiten Strömungskreis, getrennt vom ersten Strömungskreis, in Folge der Bremsbetätigung der Bremse Kühlflüssigkeit zuzuführen.

2. Bremssystem nach Anspruch 1, bei welchem die Kühlflüssigkeit im ersten Kreis unter relativ geringem Druck der Bremse zugeführt wird und die Kühlflüssigkeit in dem zweiten Kreis gleichzeitig unter relativ hohem Druck der Bremse zugeführt wird.

3. Bremssystem nach Anspruch 2, bei welchem die mit Flüssigkeit gekühlte Bremse eine im Ölbad laufende Scheibenbremse mit einer mittleren Antriebswelle ist und die Kühlflüssigkeit in dem zweiten Kreis unter relativ hohem Druck der Bremse zugeführt wird, indem sie entlang der Welle zu einem Zentralbereich der neben der Bremse liegenden Reibplatten geleitet wird.

4. Bremssystem nach einem der vorhergehenden Ansprüche, bei welchem der erste Kreis einen Wärmetauscher (6) aufweist, durch den die Kühlflüssigkeit in diesem Kreis fließt.

5. Bremssystem nach einem der vorhergehenden Ansprüche, bei welchem die Kühlflüssigkeit in den Kreisen mit geringer Strömung durch elektrisch angetriebene (1) Flüssigkeitsvortriebsmittel (2, 3) zirkuliert wird, die von einem elektrischen Versorgungskreis betrieben werden, der dazu dient, die Zufuhr von Kühlflüssigkeit zur Bremse zu steuern.

6. Bremssystem nach Anspruch 5, bei welchem die Flüssigkeitsvortriebsmittel zumindest einen Elektromotor (1) und Pumpen (23) aufweisen, die zumindest von einem Motor angetrieben werden, um jeweils Kühlflüssigkeit in dem ersten und zweiten Strömungskreis zirkulieren zu lassen.

7. Bremssystem nach Anspruch 6, bei welchem der elektrische Versorgungskreis dazu dient, die Zufuhr von Kühlflüssigkeit von beiden Pumpen zur Bremse durch den ersten Strömungskreis herbeizuführen, wenn keine Kühlflüssigkeit in dem zweiten Strömungskreis zirkuliert.

8. Bremssystem nach Anspruch 5, 6 oder 7, bei welchem der elektrische Versorgungskreis einen temperaturempfindlichen Schalter (32), der parallel zu einem weiteren Schalter (36) geschaltet ist, aufweist, welcher von einer von einem Fahrer betätigten Steuereinrichtung (B) zur Bremsbetätigung betrieben wird, wobei der weitere Schalter mit einem Elektroventil (4) verbunden ist, das zur Steuerung der Kühlflüssigkeitsströmung in dem zweiten Strömungskreis dient.

9. Bremssystem nach Anspruch 8, bei welchem das Elektroventil (4) von einer geschwindigkeitsempfindlichen Vorrichtung, welche die Fahrzeuggeschwindigkeit misst, beeinflusst wird.

## Revendications

1. Système de freinage comprenant un frein (8) refroidi par liquide comportant un boîtier à l'intérieur duquel sont disposées des surfaces de freinage fixes et rotatives coopérantes qui sont amenées en engagement de freinage lors du fonctionnement de moyens d'actionnement, un premier circuit d'écoulement (10, 10A, 11) agencé pour délivrer un liquide de refroidissement au frein via le premier circuit d'écoulement en fonction d'un paramètre opérationnel dépendant de la température pour maintenir la température d'un liquide de refroidissement dans le système au-dessous d'une valeur maximale prédéterminée, et un second circuit d'écoulement (14, 15) susceptible d'être contrôlé pour délivrer un liquide de refroidissement au frein via le second circuit d'écoulement, séparé du premier circuit d'écoulement, lors de l'actionnement du frein.

2. Système de freinage selon la revendication 1, dans lequel le liquide de refroidissement dans le premier circuit est délivré au frein à une pression relativement basse et le liquide de refroidissement dans le second circuit est simultanément délivré au frein à une pression relativement élevée.

3. Système de freinage selon la revendication 2, dans lequel le frein refroidi par liquide est un frein à disque immergé dans de l'huile ayant un arbre d'entraînement central et le liquide de refroidissement dans le second circuit est délivré au frein à une pression relativement élevée en étant délivré le long de l'arbre vers une région centrale des plaques de frottement adjacentes au frein.

4. Système de freinage selon l'une quelconque des revendications précédentes, dans lequel le premier circuit comprend un échangeur de chaleur (6) à travers lequel passe le liquide de refroidissement dans ce circuit.

5. Système de freinage selon l'une quelconque des revendications précédentes, dans lequel le liquide de refroidissement est mis à circuler dans les bas circuits d'écoulement à faible débit par des moyens de propulsion de liquide (2, 3) électriquement entraînés (1) mis en oeuvre par un circuit d'alimentation électrique servant à contrôler l'alimentation du liquide de refroidissement au frein.

6. Système de freinage selon la revendication 5, dans lequel les moyens de propulsion de liquide comprennent au moins un moteur électrique (1) et des pompes (23) entraînées par au moins un moteur pour faire respectivement circuler le liquide de refroidissement dans les premier et second circuits d'écoulement.

7. Système de freinage selon la revendication 6, dans lequel le circuit d'alimentation électrique sert à amener le fluide de refroidissement à être délivré à partir des deux pompes au frein à travers le premier circuit d'écoulement lorsque aucun fluide de refroidissement n'est mis en circulation dans le second circuit d'écoulement.

8. Système de freinage selon la revendication 5, 6 ou 7, dans lequel le circuit d'alimentation électrique comprend un commutateur (32) sensible à la température en parallèle avec un commutateur (36) supplémentaire actionné par un dispositif de commande (B) actionné par le conducteur pour actionner le frein, le commutateur supplémentaire étant connecté à une valve (4) électriquement actionnée servant à contrôler l'écoulement de liquide de refroidissement dans le second circuit de liquide.

9. Système de freinage selon la revendication 8, dans lequel la valve (4) actionnée électriquement est influencée par un dispositif sensible à la vitesse détectant la vitesse du véhicule.
